# EUROPEAN PATENT SPECIFICATION

(11) **EP 1 179 407 B1**
(45) Date of publication and mention of the grant of the patent: **09.07.2003**
(21) Application number: 00110205.2
(22) Date of filing: 17.05.2000
(51) Int. Cl.: B29C 45/44

(54) **Apparatus and method for molding plastic closures**
Vorrichtung und Verfahren zum Formen von Kunststoffverschlüssen
Procédé et dispositif pour mouler des fermetures en matière plastique

(43) Date of publication of application: 13.02.2002
(73) Proprietor: Delta Plastics, Inc., Hot Springs, Arkansas 71913 (US)
(72) Inventor: Schweigert, Lothar, Incline Village, Nevada 89450 (US); O, Ui Hwan, Los Angeles, California 90019 (US)
(74) Representative: Schmidt, Steffen J., Dipl.-Ing.

(56) References cited:
- DE-C- 4 320 644
- US-A- 4 170 316
- PATENT ABSTRACTS OF JAPAN vol. 17, no. 365 (M-1442), 9 July 1993 (1993-07-09) -& JP 05 057760 A (COPAL CO LTD), 9 March 1993 (1993-03-09)

## Description

### Background of the Invention

This invention relates to the manufacture of closures such as caps and the like, and more particularly, to a method and apparatus for molding plastic closures.

The molding of small plastic articles of even relatively simple designs often utilizes expensive and complex molding machines as exemplified by injection molding systems used for small plastic articles such as threaded closures for plastic, glass or other containers and bottles. A typical molding machine employs forming elements which are subjected to elevated temperatures and pressures. The molding machine components subjected to such conditions must be extremely rugged, necessitating the utilization of durable and expensive materials which require appropriate maintenance, repair and replacement on a regular schedule.

In one known system for the injection molding of small plastic closures, an inner mold in combination with an outer mold defines a forming volume or cavity in which a thermoplastic resin such as polypropylene or the like is injected under pressure at an elevated temperature. The various mold components must be moved relative to one another to extract or eject the molded closure from the cavity.

The art of molding plastic closures by injection, compression or other techniques is well known. Depending upon the design of the plastic closure, including the thread type or other mechanism for engaging the container, the closure may be ejected from the mold in a variety of ways. If the plastic material being molded is flexible or resilient, the closure may be stripped by a commonly known stripper ring pushing the article off of a fixed inner mold core. The molded part must be sufficiently solidified so as not to fold over onto itself during ejection but sufficiently elastic to return to essentially its original molded shape after the threads or other internal projections have been stretched over the core. If the molded material does not possess the appropriate characteristics of flexibility and rigidity for this method of ejection, the article will be damaged or may not return to its original shape and size. Moreover, a very defined or deep thread profile is inherently prone to stripping damage. Also, the closure often has other delicate or fragile features such as a tamper evident ring, which could be damaged even if an otherwise acceptable plastic is being molded.

Plastic closures can be manufactured with different features, such as continuous threads, partial or interrupted threads, or spaced hold-down lugs used commonly in child resistant safety bottles. Additionally, a closure may include a retaining rim which is used to secure a disk or insert adjacent the under surface of the upper panel of the closure. Threads, lugs or other projections from the skirt portion of the closure commonly include an undercut surface which is known to provide a more secure engagement with the threads or other mechanism on the container to which the closure is applied.

Although specialized molding systems have been proposed for the manufacture of closure caps having interrupted threads or lugs, particularly those with an undercut, such systems often include very complicated molding schemes. Commonly, a system for the manufacture of closures having interrupted threads, lugs or the like with an undercut surface includes what is usually referred to as a "collapsible" core. The collapsible core includes axially extending segments held together in an assembled configuration to form a portion of the inner mold. After the thermoplastic resin is introduced into the cavity in the mold, these segments are advanced forwardly and collapsed radially inwardly towards the axis of the mold to permit each segment to clear the threads or lugs and permit ejection of the closure without interference. Subsequently, the segments are repositioned to form the inner mold and the cycle is repeated.

Such collapsible cores are for example disclosed in the German patent DE 4,320,644 C1 and in the United States patent 4,170,316. The latter also discloses an overcap with projections extending inwardly from the skirt, and a process for making those caps.

However, known collapsible cores of the type described, including the ones mentioned above, are very expensive and the construction of such molds inherently limits the industrial applicability and reliability of such molds. The complicated and often intricate interaction between the various segments and components of the molding apparatus presents significant maintenance and reliability problems. The timing and precise interaction between the various components is critical for the proper operation of known systems. Moreover, the frictional interaction between the various moving components of a mold having a collapsible core presents additional reliability and maintenance problems.

Further complicating the industrial applicability of known injection, compression and other molding systems is the difficulty of using such systems with stack molds in which a plurality of molding systems are mounted in adjacent plates. As the plates are shifted relative to one another, multiple closures are formed and ejected providing for the manufacture of thousands of closures from a single machine in a very short time frame. However, failure of one mold component necessitates service to the entire machine thereby sacrificing a significant amount of production capability while service is being performed.

Another problem with known molding systems of the type described is the difficulty in reconfiguring the molds for the production of a variety of different closure designs. Specifically, tamper evident closures are widely used to demonstrate to the final consumer that the contents of a container have not been contaminated subsequent to the time the cap was initially secured to the container. One type of tamper evident closure employs a band connected to a bottom edge of a skirt portion of the closure by a plurality of axially extending discrete, small frangible bridges or other members that are circumferentially spaced around the closure. The band includes an inside annular rib which, in use on the container, is located below a cooperating outwardly extending rib on the neck of the container. As the closure is twisted off of the container, contact between the outside rib on the container neck and the inside rib on the band breaks the previously mentioned frangible bridges, thereby separating the band from the remainder of the closure.

Providing a molded closure with a tamper evident band as described complicates the manufacture of the closure in several respects. The formation of the band and the frangible bridges connecting the band to the skirt of the closure requires that the mold used to form the closure have corresponding recesses and protrusions which complicate the removal of the closure from the mold. Naturally, the closure must be removed from the mold in a way that does not break the frangible bridges of the closure since, of course, otherwise the closure cannot be used in the intended manner. The capability for an industrial molding machine, particularly an injection molding machine, to satisfactorily mold a closure having such a tamper evident band to date has been suspect. Furthermore, the ability to re-configure a given molding machine for the production of closures without tamper evident bands to/from the production of closures with tamper evident bands often requires significant down time thereby minimizing production capacity and efficiency.

### Summary of the Invention

These and other disadvantages of known closure molding methods and systems have been overcome by this invention as defined in the appended claims. A first presently preferred embodiment of this invention comprises an injection molding apparatus, a method of injection molding a closure and such a closure having a skirt depending downwardly from an upper panel and at least one projection extending inwardly from the skirt. The projection may be one or more intermittent or interrupted threads, lugs, stops, rims or bayonet-type engagement mechanisms for securing the closure to the upper rim of a compatible container, jar or the like.

In a presently preferred embodiment of a method for injection molding a closure, closure material such as a thermoplastic resin which is rigid, pliable, and flowable, for example styrene and polypropylene, is injected into a mold cavity formed between an outer mold and an inner mold. The outer mold includes a socket for forming the outer external surface of the closure. The inner mold includes a core and a plurality of spaced slides, each having at least one recess on an outer face thereof for forming the projection on the skirt of the closure. The slides are mounted for movement relative to the core in a direction obliquely oriented with respect to a longitudinal axis of the core to provide a collapsible inner mold.

In one embodiment, the recess on the slides includes an undercut surface to form a corresponding undercut surface on the projection, lug, thread, rim or the like of the closure. Additionally, a ring surrounds the inner mold and is mounted for movement generally parallel to the longitudinal axis of the inner mold. The injection molding method proceeds by removing the outer mold from the closure which is seated on the inner mold. In one preferred embodiment, the ring contacts the terminal edge of the skirt on the closure and the ring is mounted for movement independent from the slides on the inner mold. The closure is released from the inner mold by moving the ring in contact with the closure parallel to the longitudinal axis of the core and away from the core. The movement of the ring removes the closure off of the core and the movement of the closure translates the slides obliquely relative to the longitudinal axis of the core thereby collapsing the slides inwardly toward the longitudinal axis until the projections on the skirt of the closure disengage from the recesses on the slides. The movement of the slides to release the closure from the inner mold is advantageously a result of the interaction between the recesses and the projections on the closure and not the direct interaction between the ring and the slides. This method and the associated molding apparatus are more simplistic than known injection molding techniques. Without the closure seated on the inner mold, the forward movement of the ring would not result in the movement of the slides because the ring is separate and independently movable from the slides. The present design minimizes the number of moving parts of the molding apparatus thereby limiting the maintenance requirements for the mold.

In an alternative embodiment, the molding apparatus of this invention is used for compression molding a closure or the like. Polypropylene powder, resin or other appropriate material is introduced or placed in the cavity of the molding apparatus which is then heated to cure the molding material. The resulting closure is then ejected from the mold in a manner similar to that described with respect to the injection molding process.

A further advantage of the invention is the simplicity resulting from the reduced number of moving parts and the interchangeability of the various components. Specifically, the slides and/or the ring can be easily replaced independent from the other components of the molding apparatus. A standard ring is used for the formation of a closure without a tamper evident band; whereas, a tamper evident band forming ring is easily substituted for the standard ring when a closure having a tamper evident band is molded. Specifically, the tamper evident band forming ring includes an intaglio pattern on the ring which forms the tamper evident band on the closure. Specifically, the intaglio pattern includes relief portions for forming the tamper evident band and the frangible bridges connecting the band to the lower terminal edge of the skirt of the closure.

Additionally, a single plunger or a plurality of plungers each of which are selectively axially extendable from the core of the inner mold may be included in an alternative preferred embodiment of this invention to assist in dislodging the formed closure having a tamper evident band from the ring. Alternatively, the plunger(s) may be used to unseat the closure from the core by contacting the panel of the closure and moving the closure forwardly and thereby moving the slides obliquely and inwardly towards the longitudinal axis of the inner mold to release the recesses on the slides from the projections on the closure. The plunger may be used to advance the closure in this manner in place of and/or in addition to the movement of the ring surrounding the closure. The capability of simply swapping the tamper evident forming band ring with the standard ring without the requirement for making an entirely new molding apparatus is a key advantage for the industrial applicability of this invention.

It should be readily appreciated by those of ordinary skill in the art that a molding apparatus according to this invention may be employed in a stack mold configuration in which each of the molding components are seated within respective plates and the plates are longitudinally movable relative to one another during the automated molding process. A stack mold of the type described is shown and disclosed in U.S. Patent No. 4,019,711 which is hereby incorporated by reference; although, the particular mold components and molding method employed in the stack mold configuration as shown in that patent are distinctly different from those of this invention.

Therefore, as a result of this invention, an improved method and mold for injection, compression or other molding of a plastic closure having undercut projections such as threads, lugs, stops or the like is provided having increased simplicity, interchangeability and applicability for industrial molding manufacturing applications.

### Brief Description of the Drawings

The objectives and features of the invention will become more readily apparent from the following detailed description taken in conjunction with the accompanying drawings in which:
Fig. 1 is an exploded partially disassembled perspective view of the components of a molding apparatus for a molded closure according to a first presently preferred embodiment of this invention;
Fig. 2A is a cross-sectional view taken along line 2-2 of Fig. 1 showing the molding apparatus of Fig. 1 in a closed configuration;
Fig. 2B is a view similar to Fig. 2A with an outer mold being removed from the molded closure and a ring advancing the closure forwardly and the closure advancing slides on an inner mold core obliquely relative to the axis of the core;
Fig. 2C is a view similar to Fig. 2B with the projections on the skirt of the closure disengaging from recesses on the slides of the inner mold thereby releasing the closure from the inner mold;
Fig. 2D is an enlarged partial view of the ring of the molding apparatus of Figs. 2A through 2C;
Fig. 3A is a view similar to Fig. 2A of an alternative embodiment of the molding apparatus of this invention for forming a closure with a tamper evident band;
Fig. 3B is a view of the molding apparatus of Fig. 3A with the closure being released from the inner mold by a plunger extending from the mold core;
Fig. 4 is an enlarged partial view of the ring of the molding apparatus of Figs. 3A and 38; and
Fig. 5 is an enlarged cross-sectional view of the region 5 of Fig. 2A showing the projections on the skirt of the closure engaging the recesses on the slide of the inner mold.

### Detailed Description of the Invention

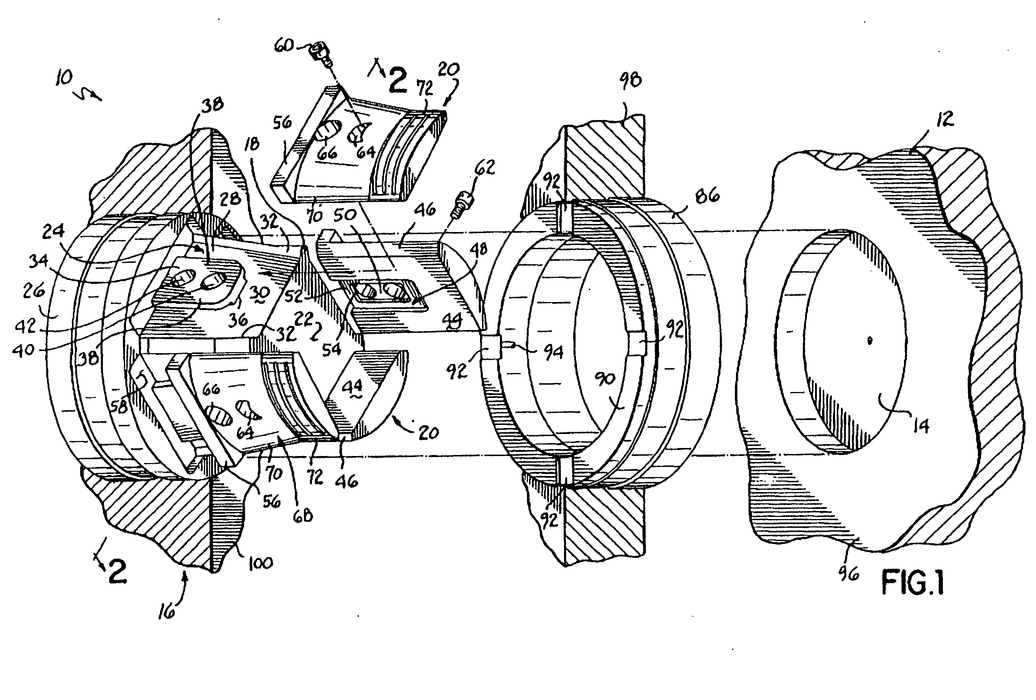

Referring to Fig. 1, a presently preferred embodiment of a molding apparatus 10 according to this invention is shown. The molding apparatus 10 includes an outer mold 12 having a socket 14 formed therein and an inner mold 16 including a mold core 18 and a plurality of slides 20, four of which are shown in Fig. 1, mounted on the core 18 for movement relative to the core 18 in a direction obliquely oriented with respect to a longitudinal axis of the core 18. The core 18 includes a generally planar upper surface 22 and a tapered or sloped body 24 angled obliquely inwardly toward the upper surface 22 from a base 26 of the inner mold 16. Each slide 20 is mounted to the core 18 and seated within a tapered and sloped channel 28 having a generally planar face 30 bounded on each lateral side by a channel sidewall 32. A guide boss 34 projects from the face 30 of the channel 28 and has a generally T-shaped cross-sectional configuration in which a base 36 of the guide 34 is juxtaposed in face-to-face contact with the face 30 of the channel 28 and flanges 38 extend from the base 36 on either side of the guide 34 and are spaced from the face 30 of the channel 28. The guide 34 includes a pair of holes 40, 42 and a screw, pin or other mechanical fastener is inserted through the lowermost hole 42 in the guide 34 to secure the guide 34 to the mold core 18.

A slide 20 is mounted on the mold core 18 in each of the channels 28 and includes a generally planar back face 44 and a pair of sidewalls 46 extending obliquely from the back face 44. The back face 44 and sidewalls 46 of the slide 20 mate with the face 30 and sidewalls 32 of the channel 28 when the slide 20 is mounted on the core 18. The spaced sidewalls 46 of the slide 20 (and the corresponding spaced sidewalls 32 of the channel 28) are non-parallel with respect to each other to minimize friction between the slide 20 and the mold core 18 during movement of the slide 20.

A T-shaped slot 48 being open on a bottom edge of the slide 20 is formed on the back face 44 of the slide 20 and is sized and configured to mate with the guide 34 mounted in the channel 28. A recess 50 is formed in a well 52 of the T-slot 48 on each slide 20. A rim 54 of the recess 50 serves a detent once the slide 20 is mounted in the channel 28 on the mold core 18. The slide 20 is mounted on the mold core 18 by sliding it downwardly so that the upper end of the guide 34 enters the open bottom end of the T-slot 48 and the respective sidewalls 32, 46 and faces 30, 44 of the slide 20 and channel 28 are in face-to-face juxtaposition until a bottom shelf 56 of the slide 20 is positioned within a seat 58 in the base 26 of the inner mold 16.

The guide 34 has upper and lower holes 40, 42 for receiving therein upper and lower screws, pins or other appropriate fasteners 60, 62. The upper and lower holes 40, 42 in the guide 34 are aligned with upper and lower through holes 64, 66 in the slide 20 when the slide 20 is positioned on the mold core 18 with the shelf 56 contained in the seat 58 of the inner mold 16. The lower screw 62 is inserted through the lower through hole 66 in the slide 20 and into the lower hole 42 in the guide 34 to secure the guide 34 to the mold core 18. Preferably, the lower screw 62 is flush or recessed with respect to an outer surface of the guide 34. The upper screw 60 is inserted through the upper through hole 64 in the slide 20 and is seated within the upper hole 40 in the guide 34 so that it projects from the outer surface of the guide 34.

With the slide 20 so mounted on the inner mold 16 and seated for movement within the channel 28, the upper screw 60 serves as a detent in combination with the rim 54 to prevent the slide 20 from sliding off of the mold core 18. Upward movement of the slide 20, as shown in Fig. 1, is limited because the rim 54 in the recess 50 of the T-slot 48 on the slide 20 contacts the head of the uppermost screw 60 projecting from the outer surface of the guide 34 to thereby prevent the slide 20 from sliding off of the mold core 18. As a result of the interaction between the rim 54 and the upper screw 60, the slides 20 are limited to upward travel to the extent shown in the slides 20 attached to the core 18 in Fig. 1.

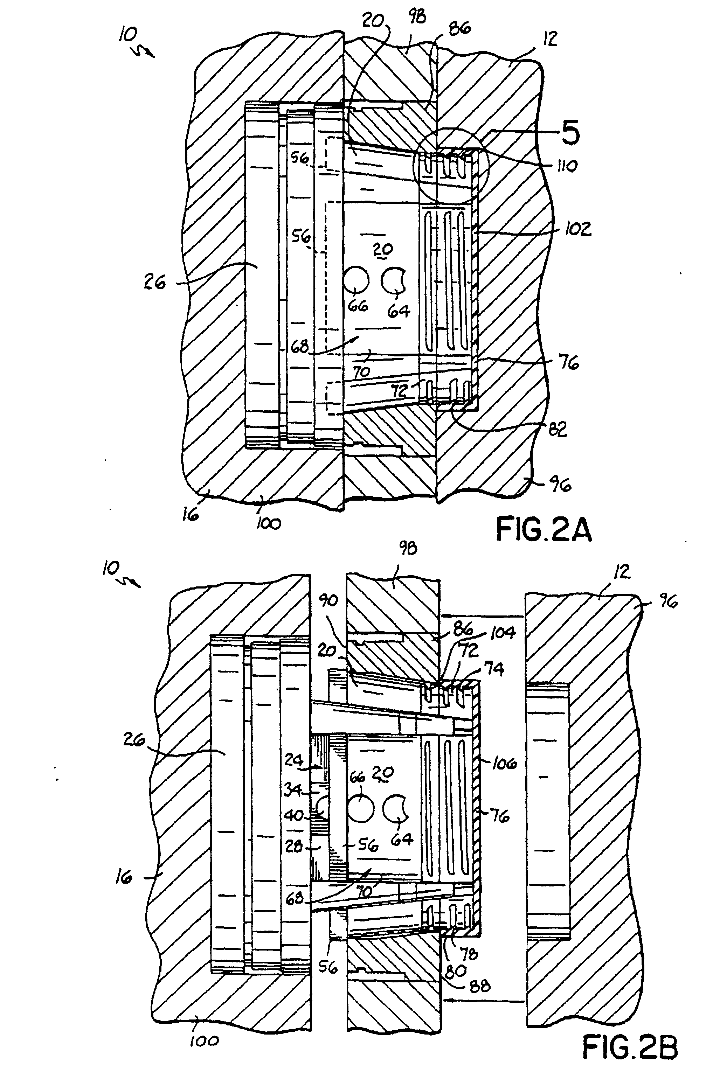

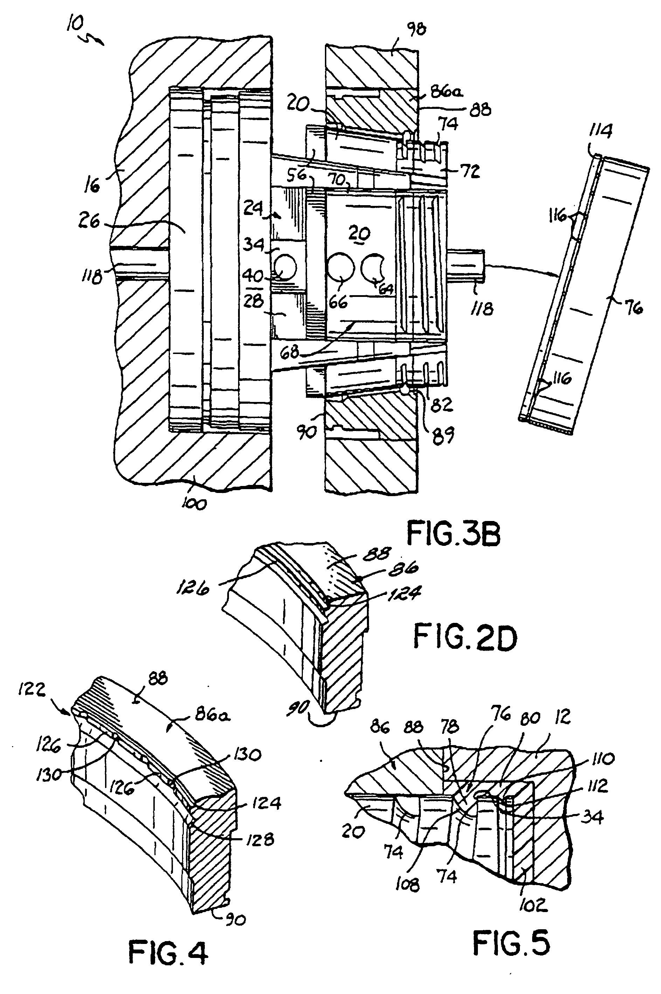

Each slide 20 in a presently preferred embodiment of the invention has a generally arcuate outer face 68 with a lower tapered section 70 and an upper section 72 having a plurality of recesses 74 formed therein. It will be appreciated by one of ordinary skill in the art that the mold 10 shown in Fig. 1 is for forming a generally round or circular closure 76 although other configurations can be produced with appropriately designed molds 10 according to this invention. The recesses 74 in the upper section 72 of each slide 20 form undercut projections 78 which extend inwardly from a skirt 80 of the closure 76 formed by the mold 10 (Figs. 2A, 2B and 5). The recesses 74 shown in the slides 20 of Fig. 1 form intermittent or interrupted threads 78 on the closure 76. Preferably, the recesses 74 include an undercut 82 which produces a corresponding undercut 84 on the projections or threads 78 of the closure 76. As used herein, the term "projection" or variations thereof means a thread of any kind, lug, stop, bayonet structure, rim or any other device which extends inwardly from the skirt 80 on the closure 76 and is formed by the recess 74 in the slide 20.

A molding apparatus 10 according to a presently preferred embodiment of this invention also includes a ring 86 which is sized and configured to fit around the slides 20 and mold core 18 and to be positioned between the outer mold 12 and the inner mold 16. The ring 86 includes an upper surface 88 and a lower surface 90 and a plurality, four of which are shown in Fig. 1, of air ducts 92 are formed and spaced approximately 90° with respect to each other on the lower surface 90 of the ring 86. The ducts 92 are in communication with notches 94 on the inner surface of the ring 86 and permit air to escape from the molding apparatus 10 during the molding process.

The outer mold 12, inner mold 16, ring 86 and various components of the molding apparatus 10 according to this invention can be contained within plates for use in a stack mold for the industrial production of closures 76 and other molded articles. A stack mold of this type is shown in U.S. Patent No. 4,019,711 and it will be appreciated by one of ordinary skill in the art that multiple molding systems according to this invention can be contained within a given stack mold for molding multiple closures 76 or other devices during a single operation.

A first presently preferred method of molding a closure 76 according to this invention involves injection molding and is shown in Fig. 2A-2C. Initially, the respective plates 96, 98, 100 are juxtaposed in face-to-face configuration as shown in Fig. 2A to produce a closed configuration of the molding apparatus 10. In the closed configuration, a cavity 102 is formed between the inner mold 16, the outer mold 12 and the ring 86 into which closure material for forming a closure 76 is introduced by injection into the cavity 102 as is readily known in the art. The closure material may be a variety of materials including styrene, polypropylene and any other thermoplastic resin or other appropriate composition. As is readily seen in Fig. 2A, the closure 76 is formed between the outer mold 12, specifically the socket 14 of the outer mold 12, and the mold core 18 and the slides 20 on the mold core 18. The upper surface 88 of the ring 86 is in contact with a terminal edge 104 of the skirt 80 of the closure 76. As shown in Fig. 2B, the molding apparatus 10 converts to an open position when the outer mold 12 is removed from the ring 86 and the inner mold 16 once the closure material has had sufficient time to harden and solidify. The socket 14 in the other mold 12 forms the outer external surface of the closure 76 including the outer surface of the skirt 80 and an upper panel 106 of the closure 76.

The mold 10 continues to open by moving the ring 86 in a direction generally parallel to the longitudinal axis of the mold core 18 and away from the base 26 of the inner mold 16. As the ring 86 moves in this direction, it maintains contact with the lower edge 104 of the skirt 80 of the closure 76 thereby moving the closure 76 with the ring 86. The threads, lugs, rims, or other projections 78 formed on the inner surface of the skirt 80 are seated within the recesses 74 in the slides 20 as shown in Fig. 2A and 2B. As a result, the movement of the closure 76 in response to the movement of the ring 86 translates the slides 20 obliquely relative to the longitudinal axis of the mold core 18. More specifically, the closure 76 is the mechanism for moving the slides 20 relative to the mold core 18.

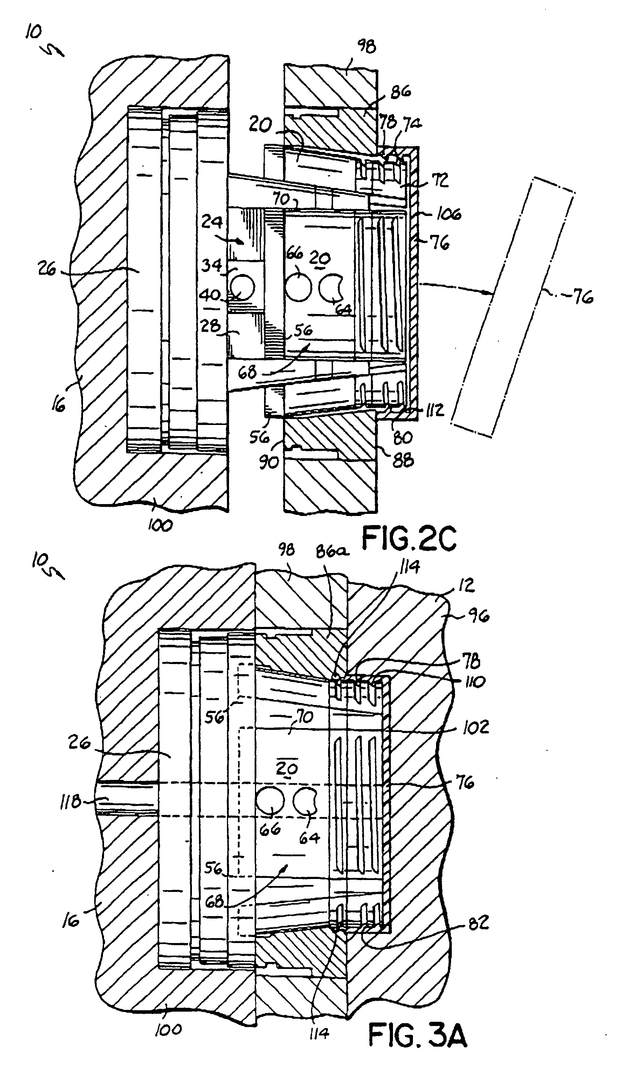

The slides 20 are movable axially from and angling radially inwardly towards the longitudinal axis of the mold core 18 as shown in Figs. 1-2C from the closed position of the mold 10 to the open position of the mold 10 as shown in Fig. 2C. As the slides 20 move upwardly and angle inwardly in response to the movement of the closure 76, the recesses 74 in the slides 20 move in two vectors. The recesses 74 are moved in a first direction generally parallel to the longitudinal axis of the mold core 18 forcing the slides 20 to the right as shown in Fig. 2A and 2B. The slides 20 and the recesses 74 also move in an inwardly radial vector toward the longitudinal axis thereby unseating the threads or other projections 78 on the closure 76 from the recesses 74 such that the closure 76 can be released from the slides 20 as shown in Fig. 2C. Thus, the present invention provides an effective mechanism for first injection molding a closure 76 having threads, lugs, rims or other projections 78 extending radially inward from the skirt 80 and removing the closure 76 from the inner mold 16 without deformation of the projections 78.

As shown in Fig. 2D, the ring 86 may include an upper groove 124 adjacent the upper surface 88 of the ring 86 above a rib 126. The upper groove 124 positions and centers the closure 76 in the molding apparatus 10 by forming and or engaging a lower edge of the skirt 80 of the closure 76.

In an alternative embodiment, the molding apparatus 10 of this invention is used for compression molding the closure 76 or the like. Polypropylene powder, resin or other appropriate material is introduced or placed in the cavity 102 of the molding apparatus 10 which is then heated to cure the molding material. The resulting closure 76 is then ejected from the mold 10 in a manner similar to that previously described with respect to the injection molding process (Figs. 2A-2C). Moreover, other molding techniques in addition to injection and compression could be utilized with the molding apparatus 10 within the scope of this invention.

Known collapsing molds often include complicated mechanisms, springs or other biasing systems for moving the slides relative to the mold core. However, the present invention avoids the need for any such complicated mechanisms and the maintenance and reliability problems associated therewith. The movement of the slides 20 is independent from the movement of the ring 86. In other words, the ring 86 is free to translate relative to the slides 20 in the forward direction in the absence of the closure 76 seated on the inner mold 16. The mechanism for translating the slides 20 towards the open position shown in Fig. 2C is the engagement of the projections 78 on the skirt 80 of the closure 76 and the recesses 74 on the slides 20.

Advantageously, the molding apparatus 10 and method according to this invention enables the formation of undercut projections 78 on the closure 76 without damage to those projections 78 during the release of the closure 76 from the mold 10. Specifically, as shown in Fig. 5, the intermittent threads 78 include an undercut surface 84 and an arcuate or rounded surface 108 in combination therewith. Preferably, the undercut 84 forms an angle with respect to the skirt 80 from between approximately 82° and 90°.

Furthermore, a retaining rim 110 also having an undercut surface 112 may be formed by the recesses 74 and slides 20 on the mold 10 according to this invention. Advantageously, the retaining rim 110 is one specific projection 78 and is positioned adjacent the panel 106 of the closure 76 and spaced therefrom. The retaining rim 110 may be interrupted or intermittent similar to the threads 78 formed on the skirt 80. The retaining rim 110 is used to secure a sealing disk (not shown) in the closure 76 in generally face-to-face contact with the lower surface of the panel 106 as is readily known in the art. Advantageously, the retaining rim 110 secures the disk to the closure 76 in a press-fit or friction-fit without the need for adhesive, glue or the like.

A second presently preferred embodiment of the molding apparatus 10 and method for molding a closure 76 according to this invention is shown in Figs. 3A, 3B and 4. Elements of this presently preferred embodiment similar to corresponding elements in the previously described preferred embodiment are identified with the same reference numerals. This presently preferred embodiment of this invention is particularly adapted for injection, compression or otherwise molding a closure 76 having a tamper evident band 114 attached via frangible spaced bridges 116 to the terminal lower edge 104 of the skirt 80 (Fig. 3B).

As shown in Fig. 3A and 3B, the molding apparatus 10 according to this preferred embodiment of the invention further includes a plunger 118 axially extendable from the inner mold 16 to project from the upper face 22 of the mold core 18. The plunger 118 is generally aligned with the longitudinal axis of the inner mold 16. After the closure material is introduced into the cavity 102 formed between the inner mold 16, the outer mold 12 and the ring 86a (Fig. 3A) and the outer mold 12 is removed from the closure 76, the ring 86a is in contact with the closure 16 and translates relative to the mold core 18. The ring 86a includes an intaglio pattern 122 proximate the upper and inner faces thereof as shown particularly in Fig. 4. The intaglio pattern 122 includes an upper groove 124 adjacent the upper surface 88a of the ring 86a, a rib 126 and a lower groove 128. The intaglio pattern 122 provides a relief for the formation of the tamper evident band 114 and frangible bridges 116 on the closure 76. Specifically, the lower groove 128 forms the band 114 and a plurality of spaced flutes 130 connecting the upper groove 124 to the lower groove 128 form the frangible bridges 116 of the closure 76 according to this embodiment of the invention. Therefore, the ring 86a of this embodiment of the invention forms the tamper evident band 114 and engages the closure 76 as the ring 86a is translated away from the base 26 of the inner mold 16 thereby advancing the closure 76 and the slides 20 in contact with the closure 76 as previously described with reference to Figs. 2A-2C.

After the ring 86a and associated plate 98 are moved away from the inner mold base 26 and associated plate 100 so that the slides 20 are translated inwardly toward the longitudinal axis of the mold core 18 to disengage the recesses 74 from the projections 78, the plunger 118 is extended to contact the panel 106 of the closure 76 and disengage the tamper evident band 114 from the ring 86a and thereby release the closure 76 from the mold 10 as shown in Fig. 3B.

Another important feature of the presently preferred embodiment of the ring 86a is a chamfer 89 extending around the ring 86a proximate the upper surface 88a thereof. The chamfer 89 holds the closure 76 in the center of the ring 86a for alignment in the molding apparatus 10. The centering of the closure 76 relative to the ring 86a with the chamfer 89 has proven to be an important feature for the present invention.

Advantageously, the tamper evident band forming ring 86a of the second presently preferred embodiment can be easily and quickly replaced as required with the ring 86 of the first presently preferred embodiment while the inner and outer molds 16, 12 remain unchanged. As such, the production capability for selectively manufacturing closures 76 with or without tamper evident bands 114 is much more efficient according to this invention. The plunger 118 or a plurality of plungers may be included with the tamper evident band forming ring or the ring 86 shown in Figs. 2A-2C. Additionally, the plunger 118 or plungers may be used as the mechanism for advancing the closure 76 in addition to or instead of the movement of the ring 86 or 86a. Specifically, extension of the plunger 118 to contact the panel 106 of the closure 76 and thereby move the closure 76 away from the mold core 18 results in the movement of the slides 20 toward the longitudinal axis of the mold core 18 and ultimately disengages the recesses 74 on the slides 20 from the projections 78 on the skirt 80. As such, the movement of the plunger 118 alone or in combination with the movement of the ring 86 or 86a can be the mechanism for moving the slides 20.

After the closure 76 has been released from the inner mold 16 and the slides 20, the components of the molding apparatus 10 according to this invention are then reassembled into the closed configuration. As the ring 86 or 86a is moved towards the inner mold base 26, the lower surface 90 of the ring 86 or 86a contacts the upper surface of the shelf 56 on each slide 20 thereby translating the slide 20 toward the closed configuration of the mold 10.

From the above disclosure of the general principles of the present invention and the preceding detailed description of preferred embodiments, those skilled in the art will readily comprehend the various modifications to which this invention is susceptible. For example, the presently preferred embodiments described in detail herein are directed to a closure or cap, but the invention is readily applicable to a jar, container or the like with internal threads for use with a closure having external threads. As such, the term "closure" and variations thereof as used herein refers to caps, containers, jars or closures as readily understood in the art. Therefore, we desire to be limited only by the scope of the following claims and equivalents thereof.

## Claims

1. A method of molding a closure (76) having a skirt (80) extending downwardly from a panel (106) and a least one projection (78) extending inwardly from the skirt (80), the method comprising:
introducing closure material into a mold cavity (102) formed by an outer mold (12) and an inner mold (16), the inner mold (16) having a core (18) and at least one slide (20) with at least one recess (74) on an outer face thereof for forming the at least one projection (78) on the skirt (80), the at least one slide (20) being mounted on the core (18) for movement relative to the core (18) in a direction obliquely oriented with respect to a longitudinal axis of the core (18);
removing the outer mold (12) from the closure (76) seated on the inner mold (16);
moving the closure (76) away from the core (18); and
moving the at least one slide (20) inwardly toward the longitudinal axis of the core (18) using the movement of the closure (76) until the at least one projection (78) on the closure (76) disengages from the at least one recess (74) in the at least one slide (20) thereby releasing the closure (76) from the inner mold (16).

2. The method claim 1, wherein a closure (76) with a plurality of interrupted projections (78) extending inwardly from the skirt (80) is molded by means of a plurality of spaced slides (20) each having at least one recess (74) on an outer face thereof for forming the projections (78) on the skirt (80).

3. The method of claim 1 or 2 further comprising:
forming a tamper evident band (114) on the skirt (80) of the closure (76).

4. The method of one of the previous claims
wherein the movement of the at least one slide (20) to release the closure (76) from the inner mold (16) is a result of the interaction between the at least one recess (74) and the at least one projection (78) on the closure (76).

5. The method of one of the previous claims, further comprising:
limiting the movement of the at least one slide (20) relative to the core (18) to inhibit the at least one slide (20) from disengaging from the core (18).

6. The method of one of the previous claims, further comprising:
forming an undercut surface (84) on the at least one projection (78).

7. The method of one of the previous claims, further comprising:
providing an undercut surface in the recesses (74) to form corresponding undercut surfaces (84) on the projections (78).

8. The method of one of the previous claims wherein
the moving of the closure (76) away from the core (18) is accomplished by contacting the closure (76) with a plunger (118) being selectively extensible from the inner mold (16) and extending the plunger (118) from the inner mold (16) and thereby moving the closure (76) away from the core (18).

9. The method of one of the previous claims, further comprising:
positioning the closure (76) in the mold cavity (102) by a groove in the outer mold (12).

10. The method of one of the previous claims wherein the moving of the closure (76) away from the core (18) is accomplished by moving a ring (86, 86a) surrounding at least a portion of the core (18) and the at least one slide (20) in a direction parallel to the longitudinal axis of the core (18), the ring (86, 86a) being in communication with the closure (76) so that the movement of the ring (86, 86a) moves the closure (76) and the movement of the closure (76) moves the at least one slide (20).

11. The method of claim 10
wherein the movement of the at least one slide (20) is independent from the movement of the ring (86, 86a).

12. The method of claim 10 or 11, further comprising:
extending a plunger (118) from the core (18) and contacting the closure (76) to assist in releasing the closure (76) from the ring.

13. The method of one of the claims 10 to 12
wherein an outer surface of the ring (86, 86a) contacts the closure (76) at a terminal edge of the skirt (80).

14. The method of one of the claims 10 to 13, further comprising:
contacting the at least one slide (20) with the ring (86, 86a) after the closure (76) has been released from the inner mold (16); and
moving the ring (86, 86a) parallel to the longitudinal axis of the core (18) and towards the core (18) to thereby reposition the at least one slide (20) on the core (18) for subsequent molding operations.

15. The method of one of the claims 10 to 14 wherein the tamper evident band (114) is formed in part by the ring (86, 86a) and the ring (86, 86a) contacts the closure (76) on the tamper evident band (114).

16. The method of claim 15 wherein the ring (86, 86a) has an intaglio pattern (122) thereon which forms the tamper evident band on the closure (76);and/or further comprising:
extending a plunger (118) from the core (18) and contacting the closure (76) to assist in releasing the closure (76) from the inner mold (16).

17. The method of one of the previous claims wherein introducing the closure (76) material into the mold cavity (102) comprises injecting the closure (76) material.

18. A molding apparatus (10) for molding a closure (76) having a skirt (80) depending downwardly from a panel (106) and at least one projection (78) extending inwardly from the skirt (80), the molding apparatus (10) comprising:
an outer mold (12) having a socket (14) formed therein;
an inner mold (16) comprising a core (18) and at least one slide (20) coupled to the core (18) for movement relative to the core (18) in a direction obliquely angled toward a longitudinal axis of the core (18), the at least one slide (20) having at least one recess (74) on an outer face thereof for forming the at least one projection (78) on the skirt (80) of the closure (76), the inner mold (16) mating with the outer mold (12) to define a cavity (102) for the formation of the closure (76) when closure (76) material is introduced into a cavity (102); and
a ring (86, 86a) surrounding a portion of the core (18) and the at least one slide (20) and being movable relative to the inner mold (16) and independent from the at least one slide (20), or a plunger (118) being selectively extensible from the inner mold (16) and independent from the at least one slide (20), the ring (86, 86a) or plunger (118) being in communication with the closure (76) formed in the cavity (102) to release the closure (76) from the slide (20);
wherein after the closure (76) has been formed in the cavity (102) the outer mold is removed from the inner mold (16) and the closure (76), the ring (86, 86a) or plunger (118) moves relative to the core (18) to release the closure (76) from the inner mold (16), the ring (86, 86a) or plunger (118) engaging the closure (76) which in turn engages the at least one slide (20) via the at least one recess (74) and the at least one projection (78) to move the slide (20) toward the longitudinal axis of the core (18) and disengage the at least one projection (78) from the at least one recess (74) and release the closure (76) from the molding apparatus (10).

19. The apparatus (10) of claim 18 wherein the at least one recess (74) of the outer face of the at least one slide (20) includes at least one recess undercut which forms a corresponding projection undercut (84) on the closure (76).

20. The apparatus (10) of claim 18 or 19, further comprising:
a plurality of substantially similar slides (20) spaced on the core (18) relative to one another to form interrupted projections (78) on the closure (76); and/or
wherein an interface between the at least one slide (20) and the core (18) does not include two parallel surfaces to minimize friction between the at least one slide (20) and the core (18).

21. The apparatus (10) of one of the claims 18 to 20, further comprising:
a channel (28) on one of the slot (48) and the core (18); and
a guide (34) on the other of the slot (48) and the core (18), the guide (34) mating with the channel (28) to couple the slide (20) to the core (18) for sliding movement relative to the core (18).

22. The apparatus (10) ofone of the claims 18 to 21, further comprising:
a plurality of substantially similar recesses (74) spaced on the at least one slide (20) relative to one another to produce projections (78) in the form of interrupted threads on the closure (76); and/or
wherein the at least one recess (74) on the slide (20) forms the projection (110) on the closure (76) which is proximate to and spaced from the panel (106) of the closure (76) for retaining an insert disk on the closure (76).

23. The apparatus (10) of one of the claims 18 to 22, further comprising:
a detent (54) to limit the movement of the slide (20) relative to the core (18) and inhibit the slide (20) from decoupling from the core (18).

24. The apparatus (10) of claim 18 or 23 comprising a ring (86, 86a) and further comprising:
a shelf (56) on the slide (20) which is engaged by the ring (86, 86a) to reposition the slide (20) on the core (18) for subsequent molding operations once the closure (76) is released from the apparatus (10).

25. The apparatus (10) of one of the claims 18 to 24, further comprising:
a plunger (118) being selectively extensible from the inner mold (16) to contact the closure (76) and assist in releasing the closure (76) from the inner mold (16).

26. The apparatus (10) of one of the claims 18 to 25, further comprising:
an intaglio pattern (122) on the ring (86, 86a) which forms a tamper evident band (114) on the closure (76).

27. The apparatus (10) of one of the claims 18 to 26, **characterized in that** the apparatus (10) is an injection molding apparatus.

## Patentansprüche

1. Verfahren zum Gießen eines Verschlusses (76) mit einer Schürze (80), die sich von einer Scheibe (106) nach unten erstreckt, und wenigstens einem Vorsprung (78), der sich von der Schürze (80) nach innen erstreckt, wobei die Methode umfasst:
ein Einführen von Verschlussmaterial in eine Formhöhlung (102), die durch eine äußere Form (12) und eine innere Form (16) gebildet wird, wobei die innere Form (16) einen Formkern (18) und wenigstens ein Gleitstück (20) mit wenigstens einer Aussparung (74) auf einer Außenseite zum Ausbilden wenigstens eines Vorsprungs (78) auf der Schürze (80) hat, wobei das wenigstens eine Gleitstück (20) auf dem Formkern (18) montiert ist, um eine Bewegung relativ zum Formkern (18) in eine schiefe Richtung bezüglich einer Längsachse des Formkerns (18) zuzulassen;
ein Entfernen der äußeren Form (12) von dem Verschluss (76), der auf der inneren Form (16) sitzt;
ein Bewegen des Verschlusses (76) weg von dem Formkern (18); und
ein Bewegen des wenigstens einen Gleitstücks (20) nach innen zu der Längsachse des Formkerns (18) hin unter Verwendung der Bewegung des Verschlusses (76), bis der wenigstens eine Vorsprung (78) auf dem Verschluss (76) sich von der wenigstens einen Aussparung (74) in dem wenigstens einen Gleitstück (20) löst und dadurch den Verschluss (76) von der inneren Form (16) freigibt.

2. Verfahren nach Anspruch 1, wobei
ein Verschluss (76) mit einer Vielzahl von unterbrochenen Vorsprüngen (78), die sich von der Schürze (80) nach innen erstrecken, mittels einer Vielzahl von beabstandeten Gleitstücken (20), von denen jedes wenigstens eine Aussparung (74) auf einer Außenseite zum Ausbilden der Vorsprünge (78) auf der Schürze (80) aufweist, gegossen wird.

3. Verfahren nach Anspruch 1 oder 2, das weiter umfasst:
ein Ausbilden eines Manipulationsanzeigebands (114) auf der Schürze (80) des Verschlusses (76).

4. Verfahren nach einem der vorhergehenden Ansprüche, wobei
die Bewegung des wenigstens einen Gleitstücks (20) zum Freigeben des Verschlusses (76) von der inneren Form (16) eine Folge der Wechselwirkung zwischen der wenigstens einen Aussparung (74) und dem wenigstens einen Vorsprung (78) auf dem Verschluss (76) ist.

5. Verfahren nach einem der vorhergehenden Ansprüche, das weiter umfasst:
ein Begrenzen der Bewegung des wenigstens einen Gleitstücks (20) relativ zum Formkern (18), um das wenigstens eine Gleitstück (20) daran zu hindern, sich vom Kern (18) zu lösen.

6. Verfahren nach einem der vorhergehenden Ansprüche, das weiter umfasst:
ein Ausbilden einer hinterschnittenen Fläche (84) auf wenigstens einem Vorsprung (78).

7. Verfahren nach einem der vorhergehenden Ansprüche, das weiter umfasst:
ein Bereitstellen einer hinterschnittenen Fläche in der Aussparung (74) zum Ausbilden entsprechender hinterschnittenen Flächen (84) auf den Vorsprüngen (78).

8. Verfahren nach einem der vorhergehenden Ansprüche, wobei
das Bewegen des Verschlusses (76) von dem Formkern (18) weg mittels eines Kontaktierens des Verschlusses (76) mit einem Stößel (118), der wahlweise aus der inneren Form (16) herausgefahren werden kann, und eines Herausfahrens des Stößels (118) von der inneren Form (16) erreicht wird, wodurch der Verschluss (76) von dem Kern (18) wegbewegt wird.

9. Verfahren nach einem der vorhergehenden Ansprüche, das weiter umfasst:
ein Positionieren des Verschlusses (76) in der Formhöhlung (102) mittels einer Kerbe in der äußeren Form (12).

10. Verfahren nach einem der vorhergehenden Ansprüche, wobei
das Bewegen des Verschlusses (76) vom Formkern (18) weg durch das Bewegen eines Rings (86, 86a) erreicht wird, der wenigstens einen Teil des Formkerns (18) und des wenigstens einen Gleitstücks (20) in einer Richtung parallel zur Längsachse des Formkerns (18) umschließt, wobei der Ring (86, 86a) so mit dem Verschluss (76) kommuniziert, dass die Bewegung des Rings (86, 86a) den Verschluss (76) bewegt und die Bewegung des Verschlusses (76) das wenigstens eine Gleitstück (20) bewegt.

11. Verfahren nach Anspruch 10, wobei
die Bewegung des wenigstens einen Gleitstücks (20) unabhängig von der Bewegung des Rings (86, 86a) ist.

12. Verfahren nach Anspruch 10 oder 11, das weiter umfasst:
ein Ausfahren eines Stößels (118) vom Formkern (18) und ein Kontaktieren des Verschlusses (76), um das Freigeben des Verschlusses (76) vom Ring zu unterstützen.

13. Verfahren nach einem der Ansprüche 10 bis 12, wobei
eine äußere Fläche des Rings (86, 86a) den Verschluss (76) an einer Endkante der Schürze (80) kontaktiert.

14. Verfahren nach einem der Ansprüche 10 bis 13, das weiter umfasst:
ein Kontaktieren des wenigstens einen Gleitstücks (20) mit dem Ring (86, 86a), nachdem der Verschluss (76) von der inneren Form (16) freigegeben wurde; und
ein Bewegen des Rings (86, 86a) parallel zu der Längsachse des Formkerns (18) und zum Formkern (18) hin, um dadurch das wenigstens eine Gleitstück (20) auf dem Formkern (18) für folgende Gießvorgänge neu zu positionieren.

15. Verfahren nach einem der Ansprüche 10 bis 14, wobei
das Manipulationsanzeigeband (114) zum Teil von dem Ring (86, 86a) geformt wird und der Ring (86, 86a) den Verschluss auf dem Manipulationsanzeigeband (114) kontaktiert.

16. Verfahren nach Anspruch 15, wobei
der Ring (86, 86a) ein Intaglio-Muster (122) trägt, welches das Manipulationsanzeigeband auf dem Verschluss (76) ausbildet und/oder das Verfahren weiter umfasst:
ein Ausfahren eines Stößels (118) vom Kern (18) und ein Kontaktieren des Verschlusses (76), um ein Freigeben des Verschlusses (76) von der inneren Form (16) zu unterstützen.

17. Verfahren nach einem der vorhergehenden Ansprüche, wobei
ein Einführen des Verschlussmaterials (76) in die Formhöhlung (102) ein Einspritzen von Verschlussmaterial (76) umfasst.

18. Gießvorrichtung(10) zum Gießen eines Verschlusses (76) mit einer Schürze (80), die sich von einer Scheibe (106) nach unten erstreckt, und wenigstens einem Vorsprung (78), der sich von der Schürze (80) nach innen erstreckt, wobei die Gießvorrichtung (10) umfasst:
eine äußere Form (12) mit einem Hohlraum (14) darin;
eine innere Form (16) mit einem Formkern (18) und wenigstens einem Gleitstück (20), das an den Formkern (18) gekoppelt ist, um eine Bewegung relativ zu dem Formkern in eine zu einer Längsachse des Formkerns (18) schrägen Richtung zu erlauben, wobei das wenigstens eine Gleitstück (20) wenigstens eine Aussparung (74) auf einer Außenseite zum Ausbilden wenigstens eines Vorsprungs (78) auf der Schürze (80) des Verschlusses (76) aufweist, wobei die innere Form (16) mit der äußeren Form (12) zusammenwirkt, um eine Höhlung (102) zu definieren, um den Verschluss (76) auszubilden, wenn Verschlussmaterial in einen Hohlraum (102) eingeführt wird; und
einen Ring (86, 86a), der einen Teil des Formkerns (18) und des wenigstens einen Gleitstücks (20) umschließt und relativ zu der inneren Form (16) und unabhängig von dem wenigstens einen Gleitstück (20) bewegbar ist, oder einen Stößel (118), der wahlweise von der inneren Form (16) ausgefahren werden kann und unabhängig von dem wenigstens einen Gleitstück (20) ist, wobei der Ring (86, 86a) oder der Stößel (118) mit dem Verschluss (76), der in der Höhlung (102) ausgebildet wird, kommuniziert, um den Verschluss (76) von dem Gleitstück (20) freizugeben;
wobei, nachdem der Verschluss (76) in der Höhlung (102) ausgebildet worden ist, die äußere Form von der inneren Form (16) und dem Verschluss (76) entfernt wird, der Ring (86, 86a) oder der Stößel (118) sich relativ zu dem Formkern (18) bewegt, um den Verschluss (76) von der inneren Form (16) freizugeben, wobei der Ring (86, 86a) oder der Stößel (118) an den Verschluss (76) angreift, welcher seinerseits an das wenigstens eine Gleitstück (20) durch die wenigstens eine Aussparung (74) und den wenigstens einen Vorsprung (78) angreift, um das Gleitstück (20) zur Längsachse des Formkerns (18) hin zu bewegen und den wenigstens einen Vorsprung (78) von der wenigstens einen Aussparung (74) zu lösen und den Verschluss (76) von der Gießvorrichtung (10) freizugeben.

19. Vorrichtung (10) nach Anspruch 18, wobei die wenigstens eine Aussparung (74) der Außenfläche des wenigstens einen Gleitstücks (20) wenigstens eine Hinterschneidung umfasst, welche eine korrespondierende Hinterschneidung (84) des Vorsprungs auf dem Verschluss (76) ausbildet.

20. Vorrichtung (10) nach Anspruch 18 oder 19, die weiter umfasst:
eine Vielzahl von im wesentlichen gleichen Gleitstücken (20), die relativ zueinander auf dem Formkern (18) beabstandet sind, um unterbrochene Vorsprünge (78) auf dem Verschluss (76) auszubilden; und/oder
bei der ein Zwischenstück zwischen dem wenigstens einen Gleitstück (20) und dem Formkern (18) keine zwei parallelen Flächen umfasst, um eine Reibung zwischen dem wenigstens einen Gleitstück (20) und dem Formkern (18) zu minimieren.

21. Vorrichtung (10) nach einem der Ansprüche 18 bis 20, die weiter umfasst:
einen Kanal (28) auf entweder einem Gleitschlitz (48) oder dem Kern (18); und
eine Führung (34) auf dem anderen der Elemente, der Gleitschlitz (48) oder Kern (18), wobei die Führung (34) mit dem Kanal (28) zusammenwirkt, um das Gleitstück (20) an den Kern (18) zu koppeln, um eine Gleitbewegung relativ zum Formkern (18) zu ermöglichen.

22. Vorrichtung (10) nach einem der Ansprüche 18 bis 21, die weiter umfasst:
eine Vielzahl von im wesentlichen ähnlichen Aussparungen (74), die auf wenigstens einem Gleitstück (20) relativ zueinander beabstandet sind, um Vorsprünge (78) in Form eines unterbrochenen Gewindes auf dem Verschluss (76) zu bilden; und/oder
wobei der wenigstens eine Vorsprung (74) auf dem Gleitstück (20) den Vorsprung (110) auf dem Verschluss (76) bildet, welcher nahe an oder gleichzeitig beabstandet von der Scheibe (106) des Verschlusses (76) ist, um eine Einsatzscheibe in der Form (76) zu halten.

23. Vorrichtung (10) nach einem der Ansprüche 18 bis 22, die weiter umfasst:
eine Arretierung (54) zum Begrenzen der Bewegung des Gleitstücks (20) relativ zum Formkern (18) und um das Gleitstück (20) daran zu hindern, sich vom Kern (18) zu lösen.

24. Vorrichtung (10) nach Anspruch 18 oder 23 mit einem Ring (86, 86a), die weiter umfasst:
einen Absatz (56) auf dem Gleitstück (20), in weiches der Ring (86, 86a) eingreift, um das Gleitstück (20) auf dem Kern (18) für folgende Gießvorgänge zu positionieren, nachdem der Verschluss (76) von der Vorrichtung (10) freigegeben worden ist.

25. Vorrichtung (10) nach einem der Ansprüche 18 bis 24, die weiter umfasst:
einen Stößel (118), der von der inneren Form (16) wahlweise ausfahrbar ist, um den Verschluss (76) zu kontaktieren und das Freigeben des Verschlusses (76) von der inneren Form (16) zu unterstützen.

26. Vorrichtung (10) nach einem der Ansprüche 18 bis 25, die weiter umfasst:
ein Intaglio-Muster (122) auf dem Ring (86, 86a), das ein Manipulationsanzeigeband (114) auf dem Verschluss (76) ausbildet.

27. Vorrichtung (10) nach einem der Ansprüche 18 bis 26, **dadurch gekennzeichnet, dass** die Vorrichtung (10) eine Spritzgussvorrichtung ist.

## Revendications

1. Procédé de moulage permettant de mouler une fermeture (76) munie d'une jupe (80) s'étendant vers le bas à partir d'un panneau (106) et d'au moins une saillie (78) s'étendant vers l'intérieur à partir de la jupe (80), le procédé comprenant:
- l'introduction de matière destinée à former la fermeture dans une cavité (102) formée par un moule extérieur (12) et un moule intérieur (16), le moule intérieur (16) ayant un noyau (18) et au moins un coulisseau (20), avec au moins un évidement (74) pratiqué sur la face extérieure dudit coulisseau en vue du formage d'au moins une saillie (78) sur la jupe (80), au moins un coulisseau (20) étant monté sur le noyau (18) de manière mobile par rapport au noyau (18) dans un sens oblique par rapport à un axe longitudinal du noyau (18);
- l'extraction du moule extérieur (12) de la fermeture (76) logée sur le moule intérieur (16);
- le démoulage de la fermeture (76) hors du noyau (18); et
- le déplacement vers l'intérieur d'au moins un coulisseau (20) dans l'axe longitudinal du noyau (18) en utilisant le mouvement de la fermeture (76), jusqu'à ce qu'au moins une saillie (78) sur la fermeture (76) sorte d'au moins un évidement (74) pratiqué dans au moins un coulisseau (20) et dégage de ce fait la fermeture (76) du moule intérieur (16).

2. Procédé selon la revendication 1, dans lequel une fermeture (76), présentant une pluralité de saillies discontinues (78) s'étendant vers l'intérieur à partir de la jupe (80), est moulée au moyen d'une pluralité de coulisseaux espacés (20) présentant chacun au moins un évidement (74) sur leur face extérieure pour le formage des saillies (78) sur la jupe (80).

3. Procédé selon la revendication 1 ou 2, comprenant en outre:
le formage d'une bague d'inviolabilité (114) sur la jupe (80) de la fermeture (76).

4. Procédé selon l'une des revendications précédentes, dans lequel le mouvement d'au moins un coulisseau (20) permettant de dégager la fermeture (76) du moule intérieur (16) naît de l'interaction entre au moins un évidement (74) et au moins une saillie (78) sur la fermeture (76).

5. Procédé selon l'une des revendications précédentes, comprenant en outre:
la limitation du mouvement d'au moins un coulisseau (20) par rapport au noyau (16) pour empêcher au moins un coulisseau (20) de se détacher du noyau (18).

6. Procédé selon l'une des revendications précédentes, comprenant en outre:
le formage d'une surface de dégagement (84) sur au moins une saillie (78).

7. Procédé selon l'une des revendications précédentes, comprenant en outre:
l'aménagement d'une surface de dégagement dans les évidements (74) pour former des surfaces de dégagement (84) correspondantes sur les saillies (78).

8. Procédé selon l'une des revendications précédentes, dans lequel le démoulage de la fermeture (76) hors du noyau (18) est réalisé par l'application, sur la fermeture (76), d'un piston (118) sélectivement extensible depuis le moule intérieur (16) et par l'extension dudit piston (118) depuis le moule intérieur (16), entraînant de ce fait le démoulage de la fermeture (76) hors du noyau (18).

9. Procédé selon l'une des revendications précédentes, comprenant en outre:
le positionnement de la fermeture (76) dans la cavité (102) du moule par une rainure pratiquée dans le moule extérieur (12).

10. Procédé selon l'une des revendications précédentes, dans lequel le démoulage de la fermeture (76) hors du noyau (18) est réalisé par le déplacement, parallèlement à l'axe longitudinal du noyau (18), d'un anneau (86, 86a) entourant au moins un segment du noyau (18) et au moins un coulisseau (20), ledit anneau (86, 86a) étant en contact avec la fermeture (76) de telle sorte que le mouvement de l'anneau (86, 86a) entraîne la fermeture (76) et que le mouvement de la fermeture (76) entraîne au moins un coulisseau (20).

11. Procédé selon la revendication 10,
dans lequel le mouvement d'au moins un coulisseau (20) est indépendant du mouvement de l'anneau (86, 86a).

12. Procédé selon la revendication 10 ou 11, comprenant en outre:
l'extension d'un piston (118) à partir du noyau (18) et l'entrée en contact avec la fermeture (76) pour aider la fermeture (76) à se dégager de l'anneau.

13. Procédé selon l'une des revendications 10 à 12,
dans lequel une face extérieure de l'anneau (86, 86a) touche la fermeture (76) sur un bord terminal de la jupe (80).

14. Procédé selon l'une des revendications 10 à 13, comprenant en outre:
- la mise en contact des coulisseaux (20) avec l'anneau (86, 86a) dès que la fermeture (76) s'est dégagée du moule intérieur (16); et
- le déplacement de l'anneau (86, 86a) parallèlement à l'axe longitudinal du noyau (18) et en direction du noyau (18) de manière à replacer au moins un coulisseau (20) sur le noyau (18) en vue d'un nouveau cycle de moulage.

15. Procédé selon l'une des revendications 10 à 14, dans lequel la bague d'inviolabilité (114) est formée en partie par l'anneau (86, 86a) et l'anneau (86, 86a) touche la fermeture (76) sur la bague d'inviolabilité (114).

16. Procédé selon la revendication 15, dans lequel l'anneau (86, 86a) présente une structure gravée en creux (122) dans laquelle se forme la bague d'inviolabilité sur la fermeture (76); et/ou comprenant en outre:
l'extension d'un piston (118) à partir du noyau (18) et la mise en contact avec la fermeture (76) pour aider la fermeture (76) à se dégager du moule intérieur (16).

17. Procédé selon l'une des revendications précédentes, dans lequel l'introduction de la matière formant la fermeture (76) dans la cavité (102) du moule comprend l'injection de la matière formant la fermeture (76).

18. Dispositif de moulage (10) pour mouler une fermeture (76) munie d'une jupe (80) s'étendant vers le bas à partir d'un panneau (106) et d'au moins une saillie (78) s'étendant vers l'intérieur à partir de la jupe (80), le dispositif de moulage (10) comprenant:
- un moule extérieur (12) pourvu d'un culot (14) formé à l'intérieur de celui-ci;
- un moule intérieur (16) comprenant un noyau (18) et au moins un coulisseau (20) relié au noyau (18) de manière mobile par rapport au noyau (18) dans un sens oblique par rapport à un axe longitudinal du noyau (18), au moins un coulisseau (20) présentant au moins un évidement (74) sur leur face extérieure pour le formage d'au moins une saillie (78) sur la jupe (80) de la fermeture (76), le moule intérieur (16) s'accouplant au moule extérieur (12) de façon à définir une cavité (102) pour le formage de la fermeture (76) lorsque de la matière formant la fermeture (76) est introduite dans une cavité (102); et
- un anneau (86, 86a) entourant un segment du noyau (18) et au moins un coulisseau (20), ledit anneau (86, 86a) étant mobile par rapport au moule intérieur (16) et indépendant d'au moins un coulisseau (20), ou un piston (118) sélectivement extensible depuis le moule intérieur (16) et indépendant d'au moins un coulisseau (20), ledit anneau (86, 86a) ou ledit piston (118) étant en contact avec la fermeture (76) formée dans la cavité (102) de manière à dégager la fermeture (76) du coulisseau (20);
- dans lequel, après que la fermeture (76) a été formée dans la cavité (102), le moule extérieur est extrait du moule intérieur (16) et de la fermeture (76), l'anneau (86, 86a) ou le piston (118) se déplace par rapport au noyau (18) pour dégager la fermeture (76) du moule intérieur (16), l'anneau (86, 86a) ou le piston (118) entraînant la fermeture (76), laquelle entraîne à son tour au moins un coulisseau (20) par le biais d'au moins un évidement (74) et d'au moins une saillie (78) de manière à déplacer le coulisseau (20) dans l'axe longitudinal du noyau (18) et de désengager au moins la saillie (78) d'au moins un évidement (74) et à dégager la fermeture (76) du dispositif de moulage (10).

19. Dispositif (10) de la revendication 18, dans lequel au moins un évidement (74) de la face extérieure d'au moins un coulisseau (20) comprend au moins une gorge de dégagement pour former un dégagement en saillie (84) correspondant sur la fermeture (76).

20. Dispositif (10) selon la revendication 18 ou 19, comprenant en outre:
- une pluralité de coulisseaux (20) essentiellement similaires espacés les uns des autres sur le noyau (18) pour former des saillies discontinues (78) sur la fermeture (76); et/ou
- dans lequel une interface entre au moins un coulisseau (20) et le noyau (18) ne présente pas deux surfaces parallèles, de manière à minimiser le frottement entre au moins un coulisseau (20) et le noyau (18).

21. Dispositif (10) selon l'une des revendications 18 à 20, comprenant en outre:
- un canal (28) sur l'une des encoches (48) et le noyau (18); et
- un guide (34) sur l'autre encoche (48) et le noyau (18), le guide (34) s'accouplant avec le canal (28) pour relier le coulisseau (20) au noyau (18) en vue de son coulissement par rapport au noyau (18).

22. Dispositif (10) selon l'une des revendications 18 à 21, comprenant en outre:
- une pluralité d'évidements (74) essentiellement similaires espacés les uns des autres sur au moins un coulisseau (20) pour former des saillies (78) en forme de filetage discontinu sur la fermeture (76); et/ou
- dans lequel au moins un évidement (74) sur le coulisseau (20) forment la saillie (110) sur la fermeture (76), la saillie étant proche du panneau (106) mais espacée de celui-ci, et servant à retenir un disque encastré dans la fermeture (76).

23. Dispositif (10) selon l'une des revendications 18 à 22, comprenant en outre:
un cran (54) pour limiter le mouvement du coulisseau (20) par rapport au noyau (18) et empêcher le coulisseau (20) de se détacher du noyau (18).

24. Dispositif (10) selon l'une des revendications 18 ou 23, comprenant un anneau (86, 86a) et comprenant en outre:
un rebord (56) sur le coulisseau (20) qui est pris par l'anneau (86, 86a) de manière à replacer le coulisseau (20) sur le noyau (18) pour un nouveau cycle de moulage dès que la fermeture (76) est dégagée du dispositif 10).

25. Dispositif (10) selon l'une des revendications 18 à 24, comprenant en outre:
un piston (118) sélectivement extensible depuis le moule intérieur (16), pour entrer en contact avec la fermeture (76) et pour aider ladite fermeture (76) à se dégager du moule intérieur (16).

26. Dispositif (10) selon l'une des revendications 18 à 25, comprenant en outre:
une structure gravée en creux (122) sur l'anneau (86, 86a), formant une bague d'inviolabilité (114) sur la fermeture (76).

27. Dispositif (10) selon l'une des revendications 18 à 26, **caractérisé par le fait que** le dispositif (10) est un dispositif de moulage par injection.
